Europäisches Patentamt

European Patent Office

Office européen des brevets

(11) Veröffentlichungsnummer : **0 480 254 B1**

(12) **EUROPÄISCHE PATENTSCHRIFT**

(45) Veröffentlichungstag der Patentschrift :
**19.01.94 Patentblatt 94/03**

(21) Anmeldenummer : **91116420.0**

(22) Anmeldetag : **26.09.91**

(51) Int. Cl.⁵ : **C01B 7/19**

(54) **Verfahren zur Reinigung von wasserfreiem Fluorwasserstoff.**

(30) Priorität : **09.10.90 DE 4031967**

(43) Veröffentlichungstag der Anmeldung :
**15.04.92 Patentblatt 92/16**

(45) Bekanntmachung des Hinweises auf die
Patenterteilung :
**19.01.94 Patentblatt 94/03**

(84) Benannte Vertragsstaaten :
**DE ES FR GB IT NL**

(56) Entgegenhaltungen :
**CHEMICAL ABSTRACTS, vol. 75, no. 10, 6.
September 1971, Columbus, Ohio, US; abstract no. 65698B, Seite 105 ;Spalte R ; &
JP-A-7115768 (MATSUSHITA ELECTRIC INDU-
STRIAL CO.) 28.04.93**

(73) Patentinhaber : **BAYER AG
D-51368 Leverkusen (DE)**

(72) Erfinder : **Bulan, Andreas, Dipl.-Ing.
Alt Langenfeld 15
W-4018 Langenfeld (DE)**
Erfinder : **Krancher, Michael, Dr.
Sigwinstrasse 74
W-5000 Köln 80 (DE)**

## Beschreibung

Die Erfindung betrifft ein Verfahren zur Entfernung von metallischen und nichtmetallischen Verunreinigungen wie Bor-, Silizium-, Phosphor-, Arsen- und Schwefelverbindungen aus wasserfreiem, technischem Fluorwasserstoff.

Dabei soll im folgenden unter "wasserfreiem Fluorwasserstoff" ein solcher Fluorwasserstoff verstanden werden, wie er mit einem üblichen technischen Verfahren erhalten wird. Insbesondere soll sein Wassergehalt unter 5000 ppm liegen.

Wasserfreier, reiner Fluorwasserstoff ist ein wichtiges chemisches Produkt für eine große Anzahl von Anwendungen. Dabei erweisen sich die oben genannten Verunreinigungen im wasserfreien, technischen Fluorwasserstoff als störend.

Zur Reinigung von wasserfreiem, technischen Fluorwasserstoff werden bereits destillative Verfahren eingesetzt, wie sie z.B. in der US-Patentschrift 3 687 622 beschrieben sind. Ebenfalls bekannt sind destillative Verfahren unter Zusatz von Hilfsstoffen (US-Patentschrift 4 756 899). Diese Verfahren sind jedoch technisch aufwendig und nicht immer in der Lage, Produkte von hinreichender Reinheit zu erzeugen. Außerdem fallen bei destillativen Verfahren naturgemäß Produktfraktionen an, in denen die Verunreinigungen angereichert sind und deren Verwendung stark eingeschränkt ist.

Zur Reinigung von wässrigen Lösungen von Fluorwasserstoff sind sowohl destillative Verfahren unter Zusatz von Hilfsmitteln (DD 62309), als auch elektrolytische Verfahren bekannt (JP 46-15768). Außerdem ist bekannt, daß insbesondere das Element Arsen aus wässrigen Lösungen von Fluorwasserstoff durch Überleiten von Inertgasen (DD 254372) entfernt werden kann. Der Nachteil des elektrolytischen Verfahrens liegt darin, daß einige der anderen oben genannten Elemente nicht oder nur sehr unvollständig entfernt werden können. Außerdem ist das Produkt dieses Verfahrens naturgemäß eine wässrige Lösung von Fluorwasserstoff, die in Folgeprozessen nicht universell einsetzbar ist. Außerdem ist die Herstellung von wasserfreiem Fluorwasserstoff aus wässrigen Lösungen von Fluorwasserstoff nur mit großem Aufwand möglich. Demgegenüber ist es umgekehrt sehr leicht möglich, aus gereinigtem, wasserfreiem Fluorwasserstoff wässrige Lösungen mit unterschiedlichen HF-Gehalten herzustellen.

Aufgabe war es daher ein Reinigungsverfahren für technischen, wasserfreien Fluorwasserstoff zur Verfügung zu stellen, bei dem die Nachteile der destillativen Verfahren vermieden und möglichst alle Verunreinigungen entfernt werden.

Die Aufgabe konnte mit dem erfindungsgemäßen Reinigungsverfahren gelöst werden.

Gegenstand der Erfindung ist ein Verfahren zur Reinigung von wasserfreiem, technischen Fluorwasserstoff wobei metallische und nichtmetallische Verunreinigungen durch Elektrolyse aus wasserfreiem, technischen Fluorwasserstoff entfernt werden und die Elektrolyse so geführt wird, daß keine explosionsfähigen Gasgemische in der Elektrolysezelle entstehen.

Als metallische und nichtmetallische Verunreinigungen werden insbesondere Bor-, Silizium-, Phosphor-, Arsen- und Schwefelverbindungen entfernt.

Insbesondere werden die störenden Arsenverbindungen aus dem wasserfreien, technischen Fluorwasserstoff entfernt.

Die Elektrolyse wird bevorzugt bei Spannungen über 1,5 Volt durchgeführt.

Eine obere Grenze für die Arbeitsspannung ist nicht erkennbar, jedoch erscheint die Durchführung der Elektrolyse bei Spannungen über 50 V nicht mehr sinnvoll.

Besonders bevorzugt sind Spannungen zwischen 2,5 V und 10 V.

Bevorzugt wird die Elektrolyse mit Elektroden aus Kohlenstoff, Platin, Nickel, Kobalt oder aus einer Kombination dieser Elemente durchgeführt. Die geometrische Form der Elektroden spielt beim Verfahren keine Rolle.

Vorzugsweise wird die Elektrolyse mit Nickelelektroden beliebiger Form durchgeführt.

Bei der Durchführung des erfindungsgemäßen Verfahrens wird die Arbeitstemperatur insbesondere so gewählt, daß der Fluorwasserstoff bei dem gewählten Arbeitsdruck flüssig vorliegt.

Besonders bevorzugt wird die Elektrolyse bei Normaldruck durchgeführt.

Die Dauer des erfindungsgemäßen Verfahrens richtet sich nach der angestrebten Poduktreinheit und der Menge der anfangs vorhandenen Verunreinigungen. Die Elektrolyse kann so lange durchgeführt werden, bis die angestrebte Reinheit erreicht ist. Dabei kann bei gleichem Reinigungseffekt die Elektrolysedauer verkürzt werden, wenn die Elektrolysespannung erhöht und/oder die Elektrodenfläche vergrößert wird.

Besonders bevorzugt ist eine Spülung der Elektrolysezelle mit Inertgas während des Verfahrens zur Verhinderung der Bildung explosionsfähiger Gasgemische.

Aus sicherheitstechnischen Gründen ist es notwendig die Bildung explosionsfähiger Gasgemische in der Elektrolysezelle zu verhindern. Dies kann im erfindungsgemäßen Verfahren wie gesagt dadurch erreicht werden, daß die Elektrolysezelle mit einem Inertgasstrom gespült wird, der groß genug ist, die Bildung explosiver Gemische in der Elektrolysezelle zu verhindern. Als Inertgase seien beispielhaft Stickstoff, Helium, Argon und Kohlendioxid genannt. Falls durch andere Maßnahmen, wie z.B. durch getrennte Abführung der an der Anode und der Kathode gebildeten Gase, sichergestellt wird, daß sich explosive Gasgemische in der Elektrolysezelle nicht bilden können, so kann ohne jeden Nachteil für das Verfahren, auf die Intertgasspülung verzichtet werden.

Vorteil des erfindungsgemäßen Verfahrens ist, daß wasserfreier, technischer Fluorwasserstoff von störenden Verunreinigungen sehr einfach befreit werden kann. Dabei werden auch solche Elemente entfernt, die mit anderen Verfahren nicht oder nur unvollständig entfernt werden können. Weiterhin wird der Anfall von Produktfraktionen, in denen die Verunreinigungen angereichert sind und die deshalb schwer zu verwerten sind, vermieden.

Die Erfindung soll anhand der folgenden Beispiele näher erläutert werden, ohne daß darin eine Einschränkung zu sehen ist.

Beispiel 1

In einer 2000 ml Elektrolysezelle, ausgerüstet mit Elektroden aus Nickelplatten, wurden 1500 ml wasserfreier, technischer Fluorwasserstoff, der die in der Tabelle angegebenen Verunreinigungen enthielt, einer Elektrolyse unterworfen. Bei einer Spannung von 5,0 V floß ein Strom zwischen 1,0 A und 0,3 A. Während der Elektrolyse wurde ein Stickstoffstrom durch die Elektrolysezelle geleitet, der ausreichte, um die Bildung explosiver Gemische zu vermeiden. Nach 48 Stunden Elektrolysedauer waren die Verunreinigungen auf die in der Tabelle angegebenen Werte abgereichert.

Tabelle : Verunreinigungen in ppm

| Element | vor der Elektrolyse | nach der Elektrolyse |
|---------|---------------------|----------------------|
| B | 0,9 | ‹ 0,3 |
| Si | 35 | 5 |
| P | 5,3 | 1,0 |
| As | 9,3 | 0,019 |
| S | 3700 | ‹ 30 |

Beispiel 2

In der gleichen Elektrolysezelle wie in Beispiel 1, ausgerüstet mit Elektroden aus Nickelnetzen, wurde wasserfreier, technischer Fluorwasserstoff mit einem Arsengehalt von 11,5 ppm einer Elektrolyse unterworfen. Bei einer Spannung von 5 V floß ein Strom zwischen 0,3 A und 0,1 A. Die Elektrolysezelle wurde wie in Beispiel 1 mit Stickstoff inertisiert. Nach 72 Stunden wurde in dem gereinigten Fluorwasserstoff ein Arsengehalt von 0,014 ppm gemessen.

Beispiel 3

Zur Kontrolle wurde wasserfreier, technischer Fluorwasserstoff der gleichen Qualität wie in Beispiel 2 für 72 Stunden in der in Beispiel 1 beschriebenen Elektrolysezelle belassen. Dabei wurde die Zelle mit Stickstoff inertisiert, ohne daß jedoch eine Elektrolyse durchgeführt wurde. Am Ende des Versuchs konnte keine Abnahme des Arsengehaltes im Fluorwasserstoff festgestellt werden.

**Patentansprüche**

1. Verfahren zur Reinigung von wasserfreiem, technischen Fluorwasserstoff, dadurch gekennzeichnet, daß metallische und nichtmetallische Verunreinigungen aus wasserfreiem, technischen Fluorwasserstoff durch Elektrolyse entfernt werden, wobei die Elektrolyse so geführt wird, daß in der Elektrolysezelle keine explosionsfähigen Gasgemische entstehen.

**2.** Verfahren gemäß Anspruch 1, dadurch gekennzeichnet, daß als metallische oder nichtmetallische Verunreinigungen Bor-, Silizium-, Phosphor-, Arsen- und Schwefelverbindungen aus dem wasserfreien, technischen Fluorwasserstoff entfernt werden.

**3.** Verfahren gemäß einem oder mehreren der Ansprüche 1 oder 2, dadurch gekennzeichnet, daß Arsenverbindungen aus dem Fluorwasserstoff entfernt werden.

**4.** Verfahren gemäß einem oder mehreren der Ansprüche 1 bis 3, dadurch gekennzeichnet, daß die Elektrolyse bei Spannungen über 1,5 V durchgeführt wird.

**5.** Verfahren gemäß einem oder mehreren der Ansprüche 1 bis 4, dadurch gekennzeichnet, daß die Elektrolyse vorzugsweise bei Spannungen zwischen 2,5 V und 10 V durchgeführt wird.

**6.** Verfahren gemäß einem oder mehreren der Ansprüche 1 bis 5, dadurch gekennzeichnet, daß die Elektrolyse mit Elektroden aus Kohlenstoff, Platin, Nickel, Kobalt oder einer Kombination dieser Elemente durchgeführt wird, wobei die geometrische Form der Elektroden ohne Bedeutung ist.

**7.** Verfahren gemäß einem oder mehreren der Ansprüche 1 bis 6, dadurch gekennzeichnet, daß die Elektrolyse mit Elektroden aus Nickel mit einer beliebigen Geometrie durchgeführt wird.

**8.** Verfahren gemäß einem oder mehreren der Ansprüche 1 bis 7, dadurch gekennzeichnet, daß die Elektrolyse bei einer solchen Temperatur durchgeführt wird, daß der Fluorwasserstoff bei dem gewählten Arbeitsdruck flüssig vorliegt.

**9.** Verfahren gemäß einem oder mehreren der Ansprüche 1 bis 8, dadurch gekennzeichnet, daß das Verfahren bevorzugt bei Normaldruck durchgeführt wird.

**10.** Verfahren gemäß einem oder mehreren der Ansprüche 1 bis 9, dadurch gekennzeichnet, daß die Bildung explosionsfähiger Gasgemische durch Spülung der Elektrolysezelle mit Inertgas verhindert wird.

## Claims

**1.** A process for the purification of anhydrous commercial hydrogen fluoride, characterised in that metallic and non-metallic impurities are removed from anhydrous commercial hydrogen fluoride by electrolysis which is carried out under such conditions that no explosive gas mixtures are formed in the electrolytic cell.

**2.** A process according to Claim 1, characterised in that the metallic or non-metallic impurities removed from the anhydrous commercial hydrogen fluoride are compounds of boron, silicon, phosphorus, arsenic and sulphur.

**3.** A process according to one or more of Claims 1 or 2, characterised in that arsenic compounds are removed from the hydrogen fluoride.

**4.** A process according to one or more of Claims 1 to 3, characterised in that electrolysis is carried out at voltages above 1.5 V.

**5.** A process according to one or more of Claims 1 to 4, characterised in that electrolysis is preferably carried out at voltages from 2.5 V to 10 V.

**6.** A process according to one or more of Claims 1 to 5, characterised in that electrolysis is carried out with electrodes of carbon, platinum, nickel, cobalt or a combination of these elements, the geometrical form of the electrodes being of no significance.

**7.** A process according to one or more of Claims 1 to 6, characterised in that electrolysis is carried out with electrodes of nickel of any geometry.

**8.** A process according to one or more of Claims 1 to 7, characterised in that electrolysis is carried out at such a temperature that the hydrogen fluoride is liquid at the chosen operating pressure.

9. A process according to one or more of Claims 1 to 8, characterised in that the process is preferably carried out at normal pressure.

10. A process according to one or more of Claims 1 to 9, characterised in that the formation of explosive gas mixtures is prevented by flushing of the electrolytic cell with inert gas.


## Revendications

1. Procédé de purification de fluorure d'hydrogène technique anhydre, caractérisé en ce qu'on élimine par électrolyse des impuretés métalliques et non métalliques de fluorure d'hydrogène technique anhydre, en conduisant l'électrolyse de façon telle que des mélanges gazeux explosifs ne soient pas produits dans la cellule électrolytique.

2. Procédé suivant la revendication 1, caractérisé en ce qu'on élimine comme impuretés métalliques ou non métalliques du fluorure d'hydrogène technique anhydre, des composés de bore, de silicium, de phosphore, d'arsenic et de soufre.

3. Procédé suivant une ou plusieurs des revendications 1 et 2, caractérisé en ce qu'on élimine des composés d'arsenic du fluorure d'hydrogène.

4. Procédé suivant une ou plusieurs des revendications 1 à 3, caractérisé en ce qu'on conduit l'électrolyse sous des tensions supérieures à 1,5 volt.

5. Procédé suivant une ou plusieurs des revendications 1 à 4, caractérisé en ce qu'on conduit l'hydrolyse de préférence sous des tensions comprises entre 2,5 et 10 volts.

6. Procédé suivant une ou plusieurs des revendications 1 à 5, caractérisé en ce qu'on conduit l'électrolyse avec des électrodes en carbone, platine, nickel, cobalt ou une association de ces éléments, la forme géométrique des électrodes étant sans importance.

7. Procédé suivant une ou plusieurs des revendications 1 à 6, caractérisé en ce qu'on conduit l'électrolyse avec des électrodes en nickel ayant une géométrie quelconque.

8. Procédé suivant une ou plusieurs des revendications 1 à 7, caractérisé en ce qu'on conduit l'électrolyse à une température choisie de manière que le fluorure d'hydrogène soit à l'état liquide à la pression de travail choisie.

9. Procédé suivant une ou plusieurs des revendications 1 à 8, caractérisé en ce qu'il est mis en oeuvre de préférence à la pression normale.

10. Procédé suivant une ou plusieurs des revendications 1 à 9, caractérisé en ce que la formation de mélanges gazeux explosifs est empêchée par balayage de la cellule électrolytique par un courant de gaz inerte.